# EUROPEAN PATENT APPLICATION

(11) **EP 4 468 680 A1**
(43) Date of publication of application: **27.11.2024**
(21) Application number: 22929564.7
(22) Date of filing: 09.10.2022
(51) Int. Cl.: H04L 49/111

(54) **MESSAGE PROCESSING METHOD AND APPARATUS, AND COMPUTER READABLE STORAGE MEDIUM**

(30) Priority: 03.03.2022 CN 202210207104
(71) Applicant: ZTE Corporation, Shenzhen, Guangdong 518057 (CN)
(72) Inventor: YU, Jinghai, Shenzhen, Guangdong 518057 (CN)
(74) Representative: WBH Wachenhausen Patentanwälte PartG mbB
(86) International application number: PCT/CN2022/124183
(87) International publication number: WO 2023/165134

(57) **Abstract**

Disclosed in the present application are a message processing method and apparatus, and a computer readable storage medium. The method comprises: receiving a first data message (S100); and when it is determined that the first data message is a BUM message, sending the first data message to a processing unit, so that the processing unit, when determining that the first data message carries a serial number package, acquires from the first data message a serial number of the first data message and processes the first data message according to the serial number of the first data message and a preset message serial number (S200).

## Description

### CROSS-REFERENCE TO RELATED APPLICATION

This application is filed on the basis of Chinese patent application No. 202210207104.4 filed March 03, 2022, and claims priority to the Chinese patent application, the entire contents of which are incorporated herein by reference.

### TECHNICAL FIELD

The present disclosure relates to the technical field of communication, and in particular, to a packet processing method and apparatus, and a computer-readable storage medium.

### BACKGROUND

At present, to suppress the broadcast storm problem of switches and other devices in the case of a loop network topology, mainstream schemes provided in the industry require much configuration work on switches and other devices, have high requirements on the caches of devices and chips, and require complicated operations, leading to low packet processing efficiency.

### SUMMARY

The following is a summary of the subject matter set forth in this description. This summary is not intended to limit the scope of protection of the claims.

The present disclosure provides a packet processing method and apparatus, and a computer-readable storage medium.

In accordance with a first aspect of the present disclosure, an embodiment provides a packet processing method, including: receiving a first data packet; and sending the first data packet to a processing unit in response to determining that the first data packet is a Broadcast, Unknown unicast, Multicast (BUM) packet, such that the processing unit, in response to determining that the first data packet carries a sequence number, acquires a sequence number of the first data packet from the first data packet and processes the first data packet according to the sequence number of the first data packet and a preset packet sequence number.

In accordance with a second aspect of the present disclosure, an embodiment provides a packet processing method, applied to a first network device, the method includes following steps.

An initial data packet carrying a first sequence number is received. The initial data packet to a processing unit is sent in response to determining that the initial data packet is a BUM packet, such that the processing unit, in response to determining that the first sequence number is not encapsulated in the initial data packet, performs encapsulation processing on the initial data packet to obtain a first data packet carrying the sequence number. The first data packet is sent to a second network device, such that the second network device executes the packet processing method in accordance with the first aspect of the present disclosure.

In accordance with a third aspect of the present disclosure, an embodiment provides a packet processing method, applied to a network system including a first network device and a second network device, the method including: receiving, by the second network device, a first data packet sent by the first network device; sending, by the second network device, the first data packet to a processing unit in response to determining that the first data packet is a BUM packet, such that in response to the processing unit determining that the first data packet carries a sequence number encapsulation, the second network device acquires a sequence number of the first data packet from the first data packet and processes the first data packet according to the sequence number of the first data packet and a preset packet sequence number.

In accordance with a fourth aspect of the present disclosure, an embodiment provides a packet processing apparatus, including: a memory, a processor, and a computer program stored in the memory and executable by the processor. The computer program, when executed by the processor, causes the processor to implement the packet processing method in accordance with the first aspect or the second aspect of the present disclosure.

In accordance with a fifth aspect of the present disclosure, an embodiment provides a computer-readable storage medium, storing a computer-executable instruction which, when executed by a computer, causes the computer to implement the packet processing method in accordance with the first aspect, the second aspect, or the third aspect of the present disclosure.

In accordance with a sixth aspect of the present disclosure, an embodiment provides a computer program product, including a computer program or a computer instruction stored in a computer-readable storage medium, where the computer program or computer instruction, when read from the computer-readable storage medium by a processor of a computer device, causes the computer device to implement the packet processing method in accordance with the first aspect, the second aspect, or the third aspect of the present disclosure.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims, and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram of a conventional method of suppressing broadcast storms;
FIG. 2 is a schematic diagram of a network system for executing a packet processing method according to an embodiment of the present disclosure;
FIG. 3 is a flowchart of a packet processing method according to an embodiment of the present disclosure;
FIG. 4 is a schematic diagram of a conventional method for suppressing broadcast storms;
FIG. 5 is a flowchart of a step S200 in FIG. 3;
FIG. 6 is a flowchart of a packet processing method according to another embodiment of the present disclosure;
FIG. 7 is a flowchart of a step S220 in FIG. 5;
FIG. 8 is a flowchart of a packet processing method according to another embodiment of the present disclosure;
FIG. 9 is a flowchart of a step S600 in FIG. 8;
FIG. 10 is a flowchart of a step S630 in FIG. 9;
FIG. 11 is a flowchart of a step S631 in FIG. 10;
FIG. 12 is a flowchart of a packet processing method according to another embodiment of the present disclosure;
FIG. 13 is a flowchart of a step S820 in FIG. 12;
FIG. 14 is a flowchart of a packet processing method according to another embodiment of the present disclosure;
FIG. 15 is a flowchart of a step S822 in FIG. 13;
FIG. 16 is a flowchart of a packet processing method according to an example;
FIG. 17 is a flowchart of a packet processing method according to another example;
FIG. 18 is a schematic diagram of network topology for Vehicles;
FIG. 19 is a schematic diagram of sequence number performed by different ports according to an example; and
FIG. 20 is a schematic structural diagram of a network device according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the embodiments described herein are merely used for illustrating the present disclosure, and are not intended to limit the present disclosure.

It should be noted that in the description of the embodiments of the present disclosure, the terms such as "first", "second" and the like used in the description, claims, and accompanying drawings are merely used for distinguishing between similar objects, and are not intended to indicate or imply relative importance, or implicitly point out the number of the indicated technical features, or implicitly point out the order of the indicated technical features. The term "at least one" means one or more and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. Although functional modules have been divided in the schematic diagrams of apparatuses and logical orders have been shown in the flowcharts, in some cases, the modules may be divided in a different manner, or the steps shown or described may be executed in an order different from the orders as shown in the flowcharts.

In addition, the technical features involved in various embodiments of the present disclosure described below can be combined with each other if not in collision.

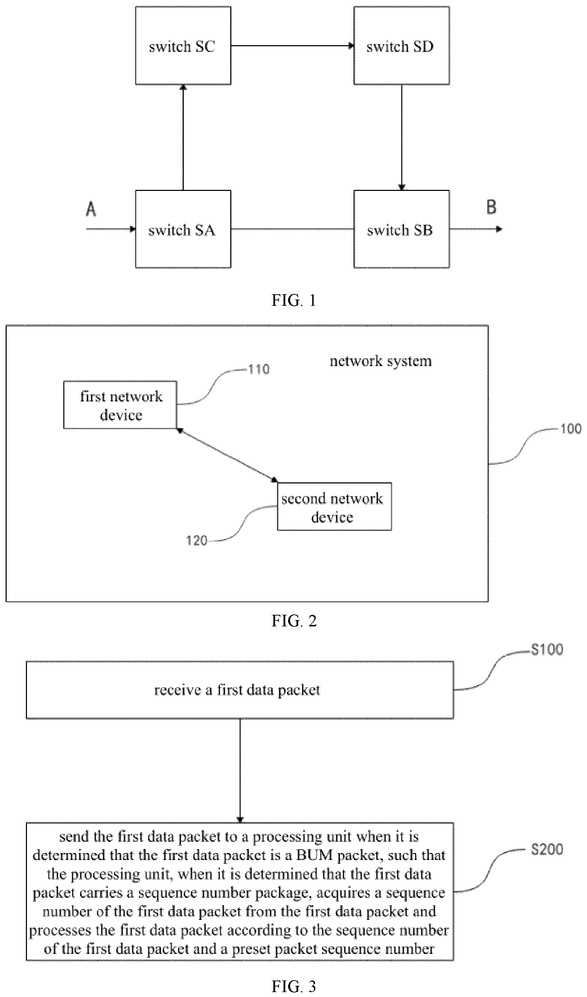

At present, in order to suppress the broadcast storm problem of switches and other devices in the case of a loop network topology, the following mainstream schemes are provided in the industry. Scheme One: As shown in FIG. 1, for a ring network topology SA/SB/SC/SD, a port of the SA in the ring topology is blocked to break the ring topology, such as Spanning Tree Protocol (STP) and similar variants. Scheme Two: Horizontal dividing and protocol conversion are performed on a network device, or packets are forwarded via a pre-built network tunnel, to avoid the formation of a loop inside the network device and destroy the conditions for the formation of broadcast storms.

Both the two schemes require much configuration work on switches and other devices, have high requirements on the caches of devices and chips, and require complicated operations, leading to low packet processing efficiency.

In view of the above, the present disclosure provides a packet processing method and apparatus, and a computer-readable storage medium. According to the schemes provided in the embodiments of the present disclosure, a first data packet is first received, and when it is determined that the first data packet is a BUM packet, the first data packet is sent to a processing unit. Therefore, the processing unit can distinguish a normally forwarded service packet from a particular BUM packet, thereby reducing the cache requirement on a chip. When determining that the first data packet is a data packet carrying a sequence number, the processing unit processes the first data packet according to a sequence number of the first data packet and a preset packet sequence number, and determines according to a result of the processing of the first data packet whether to forward or discard the first data packet. Therefore, the chip performance of the processing unit can be fully utilized to quickly improve the packet processing advantage and realize the distinguishing BUM packets from other types of packets, thereby conveniently and efficiently suppressing network storms.

The embodiments of the present disclosure will be further described in detail below in conjunction with the accompanying drawings.

FIG. 2 is a schematic diagram of a network system for executing a packet processing method according to an embodiment of the present disclosure.

As shown in figure, the network system 100 mainly includes a first network device 110 and a second network device 120. The first network device 110 is configured to receive an initial data packet, determine whether the initial data packet carries a sequence number, and then forward the initial data packet or a encapsulated first data packet. The second network device 120 is configured to receive the first data packet sent by the first network device 110, and forward or discard the first data packet according to a sequence number of the first data packet and a preset packet sequence number.

FIG. 3 is a flowchart of a packet processing method according to an embodiment of the present disclosure. The packet processing method includes, but not limited to, following steps S100 to S200.

It should be noted that steps S 100 to S200 in FIG. 3 may be applied to, for example, but not limited to, a second network device in a network system.

At the step S 100, a first data packet is received.

At the step S200, the first data packet is sent to a processing unit when it is determined that the first data packet is a BUM packet, such that the processing unit, when it is determined that the first data packet carries a sequence number, acquires a sequence number of the first data packet from the first data packet, and processes the first data packet according to the sequence number of the first data packet and a preset packet sequence number.

In an embodiment, after the first data packet is received, a type of the first data packet is first determined according to a packet matching rule; and when it is determined that the first data packet is a BUM packet, the BUM packet is sent to the processing unit, i.e., a Central Processing Unit (CPU) of the network device for processing. The processing unit may distinguish a normally forwarded service packet from a particular BUM packet for processing, thereby reducing the cache requirement on the switch chip. If the first data packet does not need to be sent to the CPU for processing, the first data packet is forwarded according to a normal packet forwarding process. If the first data packet needs to be sent to the CPU, it is determined whether the first data packet carries a sequence number. When determining that the first data packet carries a sequence number, the processing unit acquires a sequence number of the first data packet from the first data packet for sequence number comparison in subsequent steps to determine the type of the packet.

In an embodiment, if it is determined that a BUM packet does not need to be sent to the CPU for processing, the BUM packet is forwarded together with normal service packets, which leads to an increase in the cache requirement on the chip and is not conducive to suppressing broadcast storms.

It should be noted that there may be a variety of packet matching rules, such as an Access Control List (ACL) rule, a Transmission Control Protocol (TCP) rule, etc. In this embodiment, the packet matching rule is a BUM packet rule, which may be manually configured in advance, or may be automatically configured by the device. It is not particularly limited in this embodiment.

In an embodiment, the first data packet is processed based on a comparison of the sequence number of the first data packet with the preset packet sequence number, so as to determine whether to forward or discard the first data packet subsequently, thereby suppressing broadcast storms.

It can be understood that in this embodiment, receiving of the first data packet and the above steps may be executed by the second network device, and the details will not be repeated here.

It should be noted that the processing unit may be a CPU, a Data Processing Unit (DPU), or the like.

It can be understood that the sequence number of the first data packet is encapsulated in the sequence number, so an identifier of the sequence number corresponds to the sequence number of the first data packet.

It should be noted that the preset packet sequence number may be, but not limited to, a sequence number of a second data packet received last time, and the preset packet sequence number in this embodiment is a sequence number of a second data packet received and stored last time by the second network device.

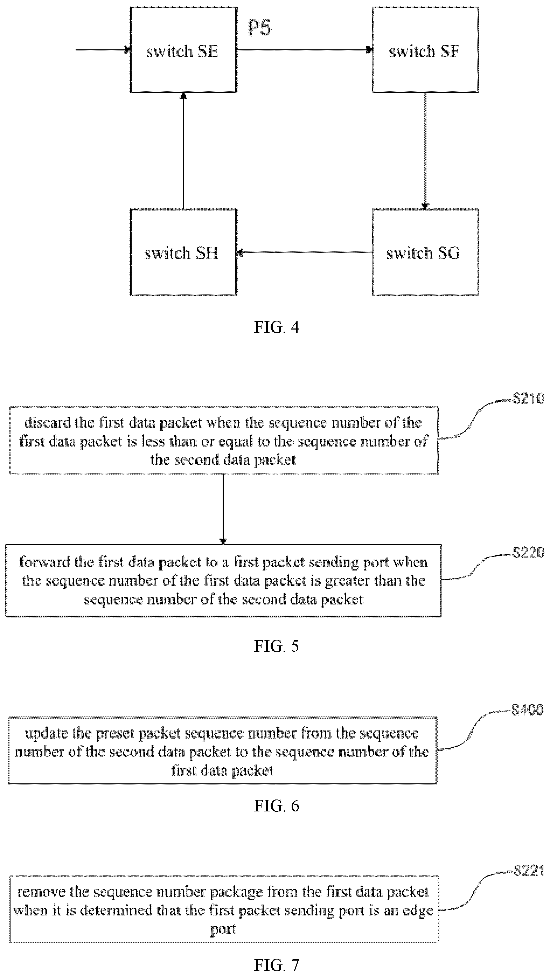

FIG. 4 is a schematic diagram of a conventional method for suppressing broadcast storms, where a loop is broken at an egress interface according to a sequence number in a packet. A sequence number is encapsulated in a packet sent from a port P5 of a switch SE. The packet passes through switches SF, SG, and SH. When the packet returns to SE, sequence number detection is performed at the port P5. When it is determined that the sequence number in the returned packet does not conform to a rule, the packet is discarded, thus avoiding broadcast storms. The egress interface is provided with at least one port.

It can be understood that the conventional method of suppressing broadcast storms has high requirements on the chip, and on a distributed rack, a packet to be looped back needs to be circled on the device, and the packet can be eliminated only at the egress interface. This embodiment can solve the problem encountered in suppressing broadcast storms.

FIG. 5 is a flowchart of the step S200 in FIG. 3. The step S200 includes, but not limited to, following steps S210 to S220.

At the step S210, the first data packet is discarded when the sequence number of the first data packet is less than or equal to the sequence number of the second data packet.

At the step S220, the first data packet is forwarded to a first packet sending port when the sequence number of the first data packet is greater than the sequence number of the second data packet.

In an embodiment, when the sequence number of the first data packet is less than or equal to the sequence number of the second data packet stored by the network device last time, it is determined that the first data packet is an invalid packet, and the first data packet is discarded, to prevent the formation of a broadcast storm. For example, it is assumed that the sequence number of the first data packet is 0 and the sequence number of the second data packet is 1. In this case, the sequence number of the first data packet is less than the sequence number of the second data packet, indicating that the first data packet is an invalid packet, so the first data packet is discarded.

It should be noted that the first packet sending port corresponds to the first data packet.

In an embodiment, when the sequence number of the first data packet is greater than the sequence number of the second data packet stored by the network device last time, it is determined that the first data packet is a valid packet, and the first data packet is forwarded to the first packet sending port. For example, it is assumed that the sequence number of the first data packet is 1 and the sequence number of the second data packet is 0. In this case, the first data packet is greater than the second data packet, so the first data packet is forwarded to the first packet sending port.

It should be noted that the number of first packet sending ports may be more than one, and the type of the first packet sending port may be a non-edge port which is connected to a switch, or indirectly connected to any switch through a network connected thereto, or an edge port which is neither directly connected to a switch, nor indirectly connected to a switch through a network connected thereto. When the first packet sending port is a non-edge port, the first data packet is further forwarded to a corresponding port.

FIG. 6 is a flowchart of a packet processing method according to another embodiment of the present disclosure. The packet processing method includes, but not limited to, a following step S400.

At the step S400, the preset packet sequence number is updated from the sequence number of the second data packet to the sequence number of the first data packet.

In an embodiment, when the first data packet is forwarded to the first packet sending port, the sequence number of the second data packet is updated at the same time to make the sequence number of the second data packet equal to the sequence number of the first data packet, and then the network device stores the updated sequence number for the determination of subsequently received data packets.

FIG. 7 is a flowchart of the step S220 in FIG. 5. S220 includes, but not limited to, a following step S221.

At the step S221, the sequence number is removed from the first data packet when it is determined that the first packet sending port is an edge port.

In an embodiment, when it is determined that the first packet sending port is an edge port, the sequence number is removed from the first data packet, and then the first data packet without the sequence number is sent to the corresponding port. In this case, the sequence number in the first data packet is removed by the edge port, such that the first data packet does not carry the sequence number, thereby realizing the forwarding of the first data packet by other ports.

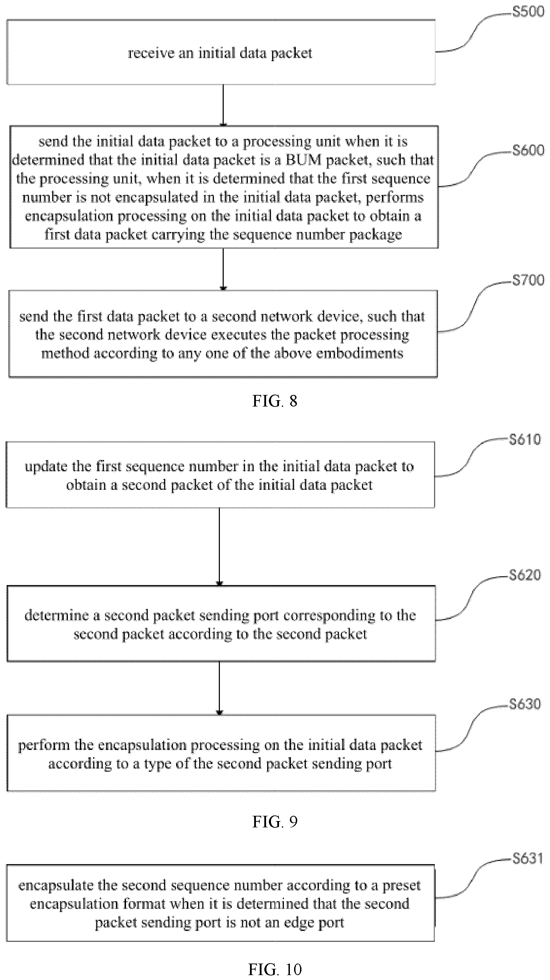

FIG. 8 is a flowchart of a packet processing method according to another embodiment of the present disclosure. The packet processing method is applied to a first network device, and includes, but not limited to, following steps S500 to S700.

At the step S500, an initial data packet carrying a first sequence number is received.

At the step S600, the initial data packet is sent to a processing unit when it is determined that the initial data packet is a BUM packet, such that the processing unit, when it is determined that the first sequence number is not encapsulated in the initial data packet, performs encapsulation processing on the initial data packet to obtain a first data packet carrying the sequence number.

In an embodiment, when it is determined that the initial data packet is a BUM packet, the BUM packet is sent to the processing unit, such that the processing unit determines whether the first sequence number is encapsulated in the initial data packet. When determining that the first sequence number is not encapsulated in the initial data packet, the processing unit performs encapsulation processing on the initial data packet. In this way, the processing unit can identify a data packet obtained through encapsulation.

It should be noted that the first sequence number corresponds to the sequence number encapsulation, and the processing unit is a CPU or a DPU of the first network device.

At the step S700, the first data packet is sent to a second network device, such that the second network device executes the packet processing method according to any one of the above embodiments.

In an embodiment, when it is determined that the initial data packet does not carry a sequence number, encapsulation processing is performed on the initial data packet to obtain a sequence number, and then the first data packet is sent to the second network device, such that the second network device can execute the steps S 100 to S200 in the packet processing method to perform packet forwarding. In this way, a data packet without a sequence number is encapsulated to distinguish the type of the data packet, so as to suppress broadcast storms.

FIG. 9 is a flowchart of the step S600 in FIG. 8. The step S600 includes, but not limited to, following steps S610 and S630.

At the step S610, the first sequence number of the initial data packet is updated to obtain a second packet of the initial data packet.

In an embodiment, after it is determined that the initial data packet does not carry the first sequence number, the first sequence number of the initial data packet is updated to obtain the second packet of the initial data packet. The second packet is identical to a packet already stored in the first network device, to facilitate the subsequent finding of a corresponding second packet sending port.

At the step S620, the second packet sending port corresponding to the second packet is determined according to the second packet.

It should be noted that the second packet sending port carries a preset encapsulation format of the port itself.

In an embodiment, the second packet sending port corresponding to the second packet is determined according to the second packet, to facilitate forwarding of the data packet.

At the step S630, the encapsulation processing is performed on the initial data packet according to a type of the second packet sending port.

It should be noted that the type of the second packet sending port may be, for example, Parallel Redundancy Protocol (PRP), High-availability Seamless Redundancy (HSR), Rules Tag (RTag), etc., which is not particularly limited in this embodiment.

FIG. 10 is a flowchart of the step S630 in FIG. 9. The step S630 includes, but not limited to, a following step S631.

At the step S631, the second sequence number is encapsulated according to a preset encapsulation format when it is determined that the second packet sending port is not an edge port.

In an embodiment, before the encapsulation processing is performed on the initial data packet according to the type of the second packet sending port, it is determined whether the second packet sending port is an edge port. When it is determined that the second packet sending port is not an edge port, the second sequence number is encapsulated according to the preset encapsulation format.

It should be noted that the preset encapsulation format matches the second packet sending port. When the type of the second packet sending port is PRP, the preset encapsulation format is also PRP. When the type of the second packet sending port is HSR, the preset encapsulation format is also HSR. When the type of the second packet sending port is RTag, the preset encapsulation format is also RTag.

It can be understood that when it is determined that the second packet sending port is an edge port, the initial data packet is directly sent out through the edge port.

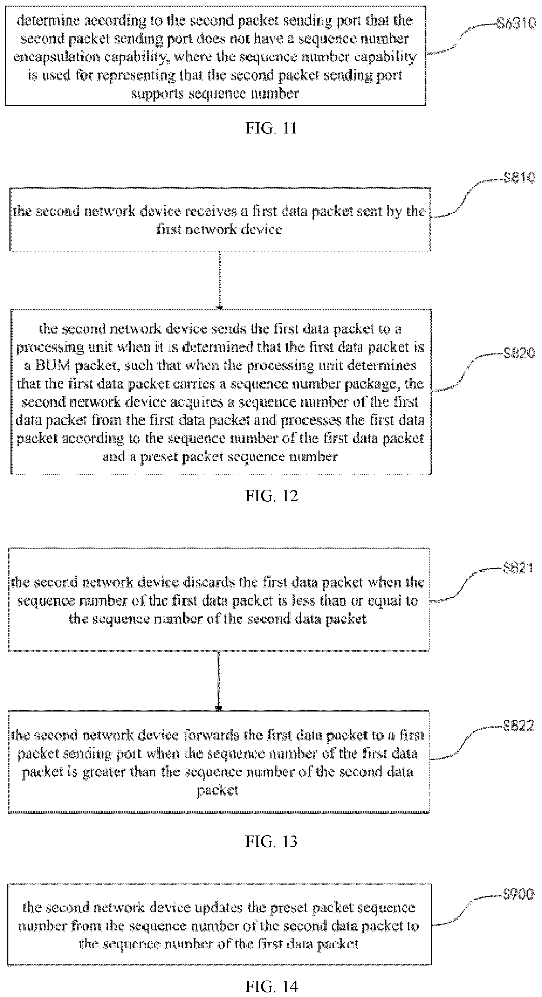

FIG. 11 is a flowchart of the step S631 in FIG. 10. The step S631 includes, but not limited to, a following step S6310.

At the step S6310, it is determined according to the second packet sending port that the second packet sending port does not have a sequence number capability, which represents that the second packet sending port supports sequence number.

In an embodiment, before the step S631, it is determined whether the second packet sending port supports sequence number. When the second packet sending port does not have the sequence number capability, the steps S610 to S630 are executed.

It should be noted that when the second packet sending port has the sequence number capability, the second packet sending port directly performs sequence number according to the initial data packet and the second packet, and forwards a data packet obtained through encapsulation.

FIG. 12 is a flowchart of a packet processing method according to another embodiment of the present disclosure. The packet processing method is applied to a network system, and includes, but not limited to, following steps S810 to S820.

It should be noted that the network system includes a first network device and a second network device. The first network device may execute the method steps S500 to S700 in FIG. 8, the method steps S610 to S630 in FIG. 9, the method step S631 in FIG. 10, or the method step S6310 in FIG. 11. The second network device may execute the method steps S100 to S200 in FIG. 3, the method steps S210 to S220 in FIG. 5, the method step S400 in FIG. 6, or the method step S221 in FIG. 7.

At the step S810, the second network device receives a first data packet sent by the first network device.

At the step S820, the second network device sends the first data packet to a processing unit when it is determined that the first data packet is a BUM packet, such that when the processing unit determines that the first data packet carries a sequence number, the second network device acquires a sequence number of the first data packet from the first data packet and processes the first data packet according to the sequence number of the first data packet and a preset packet sequence number.

It should be noted that the preset packet sequence number is a sequence number of a second data packet received last time.

It should be noted that the steps in this embodiment have the identical technical principles and the identical technical effects as the steps S100 to S200 in the embodiment shown in FIG. 3. For the technical principles and technical effects of this embodiment, reference may be made to the related description in the embodiment shown in FIG. 3. To avoid redundancy, the details will not be repeated here.

FIG. 13 is a flowchart of the step S820 in FIG. 12. The step S820 includes, but not limited to, following steps S821 to S822.

At the step S821, the second network device discards the first data packet when the sequence number of the first data packet is less than or equal to the sequence number of the second data packet.

At the step S822, the second network device forwards the first data packet to the first packet sending port when the sequence number of the first data packet is greater than the sequence number of the second data packet.

It should be noted that the first packet sending port corresponds to the first data packet.

It should be noted that the steps in this embodiment have the identical technical principles and the identical technical effects as the steps S210 to S220 in the embodiment shown in FIG. 5. For the technical principles and technical effects of this embodiment, reference may be made to the related description in the embodiment shown in FIG. 5. To avoid redundancy, the details will not be repeated here.

FIG. 14 is a flowchart of a packet processing method according to another embodiment of the present disclosure. The packet processing method includes, but not limited to, a following step S900.

At the step S900, the second network device updates the preset packet sequence number from the sequence number of the second data packet to the sequence number of the first data packet.

It should be noted that the operation in this embodiment have the identical technical principles and the identical technical effects as the step S400 in the embodiment shown in FIG. 6. For the technical principles and technical effects of this embodiment, reference may be made to the related description in the embodiment shown in FIG. 6. To avoid redundancy, the details will not be repeated here.

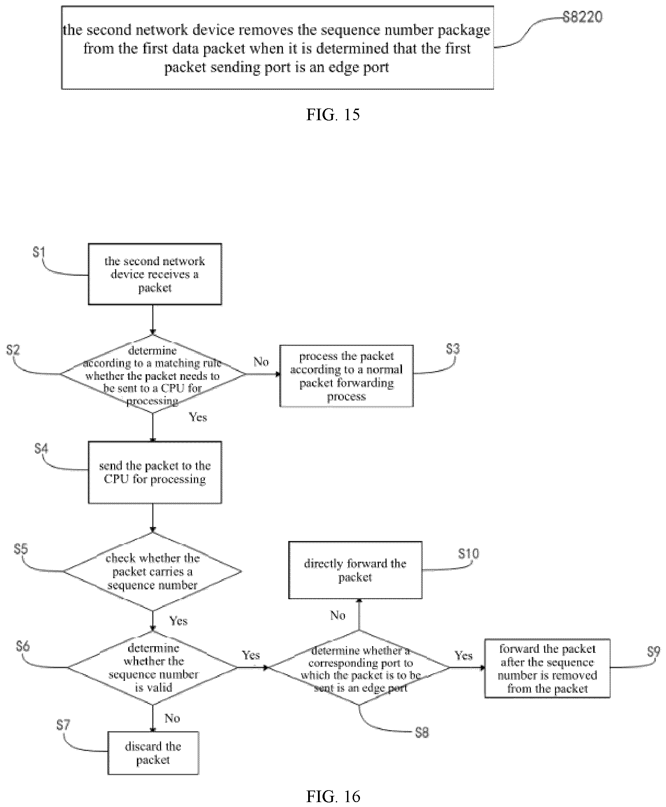

FIG. 15 is a flowchart of the step S822 in FIG. 13. The step S822 includes, but not limited to, a following step S8220.

At the step S8220, the second network device removes the sequence number from the first data packet when it is determined that the first packet sending port is an edge port.

It should be noted that the step in this embodiment have the identical technical principles and the identical technical effects as the step S221 in the embodiment shown in FIG. 7. For the technical principles and technical effects of this embodiment, reference may be made to the related description in the embodiment shown in FIG. 7. To avoid redundancy, the details will not be repeated here.

To more clearly describe the process of the packet processing method in the embodiments of the present disclosure, examples are given below.

### Example One:

FIG. 16 is a flowchart of a packet processing method according to an example.

It should be noted that processing units in this embodiment include a first processing unit and a second processing unit. The first network device includes the first processing unit, and the second network device includes the second processing unit. The packet processing method in this example is applied to the second network device. The packet processing method includes the following steps.

When the second network device receives a packet:
At a step S1, the second network device receives a packet.

At a step S2, it is determined according to a matching rule whether the packet needs to be sent to a CPU for processing.

It should be noted that the CPU may be replaced with a DPU, which will not be repeated below.

At a step S3, if not, the packet is processed according to a normal packet forwarding process.

At a step S4, if so, the packet is sent to the CPU for processing.

At a step S5, the CPU checks the packet to determine whether the packet is encapsulated with a sequence number.

It should be noted that if the packet is a known protocol packet, the packet is directly sent to a corresponding protocol module for processing, and no additional operation is performed.

At a step S6, when the packet is encapsulated with a sequence number, the second network device determines whether the sequence number is valid.

At a step S7, when the packet is an invalid packet, the packet is discarded.

At a step S8, when the packet is a valid packet, it is determined whether a corresponding port to which the packet is to be sent is an edge port.

It should be noted that an initial sequence number value is 0 by default, a sequence number of a packet already sent is defined as Seq_old, and a sequence number of the current packet is defined as Seq_new. If Seq_new<=Seq_old, it is determined that the packet is an invalid packet and needs to be discarded. Otherwise, if Seq_new>Seq_old, it is determined that the packet is a valid packet, and the packet is sent to one or more corresponding ports, and at the same time

Seq_old is updated to make Seq_old=Seq_new.

At a step S9, when the corresponding port is an edge port, the packet is forwarded after the sequence number is removed from the packet.

At a step S 10, when the corresponding port is not an edge port, the packet is directly forwarded.

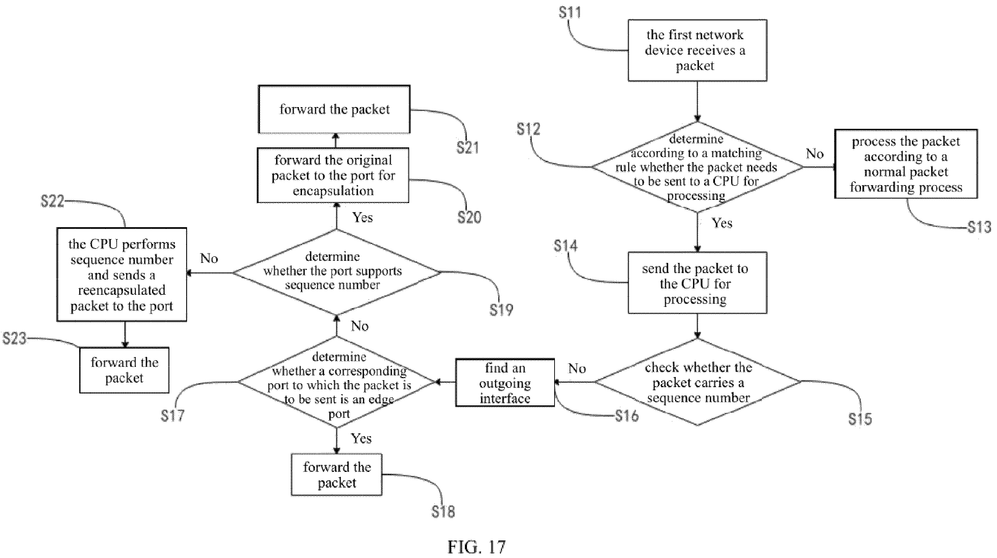

FIG. 17 is a flowchart of a packet processing method according to another example. The packet processing method is applied to a first network device, and includes the following steps.

It can be understood that the first network device includes a processing unit.

When the first network device receives a packet:
At a step S11, the first network device receives a packet.

At a step S12, it is determined according to a matching rule whether the packet needs to be sent to a CPU for processing.

It should be noted that the CPU may be replaced with a DPU, which will not be repeated below.

At a step S13, if not, the packet is processed according to a normal packet forwarding process.

At a step S14, if so, the packet is sent to the CPU for processing.

At a step S 15, the CPU checks the packet to determine whether the packet is encapsulated with a sequence number.

At a step S 16, when the packet is not encapsulated with a sequence number, an egress interface is found.

At a step S 17, the first network device determines whether the corresponding egress interface is an edge port.

At a step S18, when the egress interface is an edge port, the packet is forwarded.

At a step S19, when the egress interface is not an edge port, it is determined whether the port supports sequence number.

At a step S20, when the port supports sequence number, the original packet is forwarded to the port for encapsulation.

It should be noted that if the port supports sequence number by a chip, the original packet and Seq_new are sent to a forwarding chip, encapsulated by the port, and then sent out.

At a step S21, the packet is forwarded.

At a step S22, when the port does not support sequence number, the CPU performs sequence number and sends a re-encapsulated packet to the port.

It should be noted that if the port does not support sequence number by a chip, the CPU adds a sequence number to the packet according to an encapsulation format set by the egress interface, finds the egress interface, and sends out the packet with the sequence number.

At a step S23, the packet is forwarded.

### Example Two:

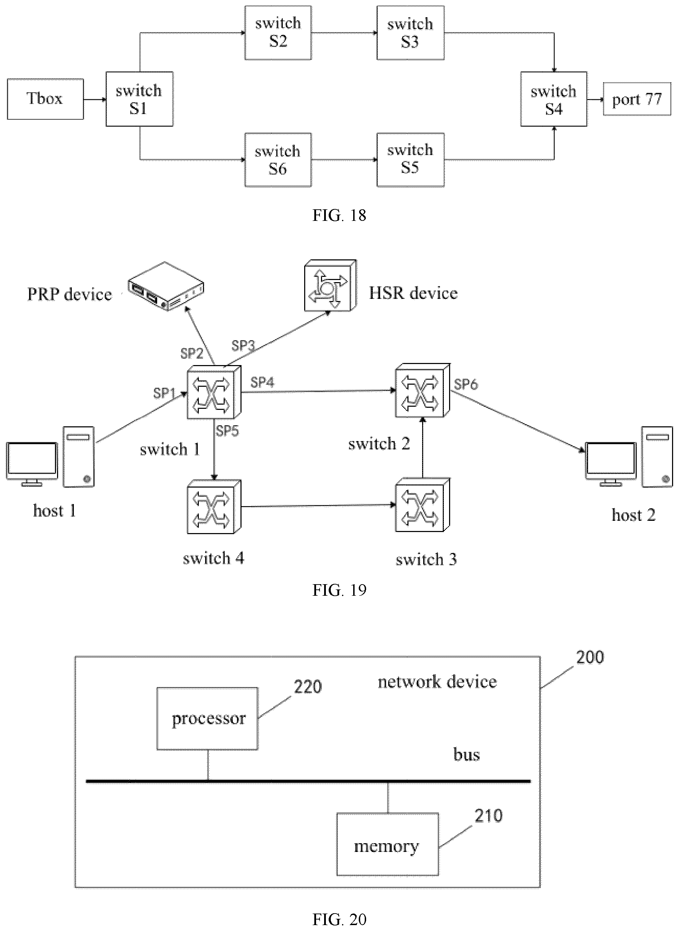

FIG. 18 is a schematic diagram of networking for an encapsulated RTag packet elimination loop;
As shown in FIG. 18, switches S1, S2, S3, S4, S5, and S6 form a ring network, the switch S1 is connected to a Telematics box (Tbox), and the switch S4 is connected to a port 77.

A packet processing method according to this example includes the following steps.

At a step S30, a BUM packet sent by the Tbox arrives at the switch S 1.

At a step S31, according to a matching policy, the switch S1 finds that the BUM packet needs to be sent to a CPU for processing.

At a step S32, the CPU of the switch S1 finds that this packet is a BUM packet, which is neither a known protocol packet, nor carries a sequence number, so sequence number needs to be performed.

At a step S33, an egress interface is found, and it is determined that an encapsulation format corresponding to the egress interface is RTag.

It should be noted that only two interfaces in the ring network are described herein.

At a step S34, the CPU of the switch S 1 performs RTag encapsulation, where the BUM packet enters for the first time, and the sequence number Seq_new=Seq_old=0; and the sequence number Seq_new is updated to make Seq_new=Seq_old+1=1, and the sequence number of 1 is encapsulated into an RTag packet.

At a step S35, the encapsulated RTag packet is sent to the two corresponding ports, and Seq_old is updated to make Seq_old=1.

At a step S36, the two encapsulated packets arrive at the switch S4 through two paths, and a first arriving packet received by the switch S4, and it is sent to a CPU of the switch S4 for processing.

It should be noted that the two paths are respectively S1/S2/S3 and S1/S6/S5, where the packet in this embodiment is from the path S1/S2/S3.

At a step S37, the CPU of the switch S4 finds that this packet is a BUM packet, which is not a known protocol packet, but carries a sequence number service flow, so validity of the sequence number needs to be determined.

At a step S38, a sequence number corresponding to the packet and stored in the CPU of the switch S4 at this time is Seq_old=0, the sequence number Seq_new carried in the packet is 1, and Seq_new>Seq_old, so it is determined that the packet is valid, and the packet continues to be forwarded to a related port.

At a step S39, when the packet is sent to the port 77, it is found that this port is an edge port, so the sequence number in the RTag packet is removed at first, and then Seq_old is updated to make Seq_old=Seq_new=1.

At a step S40, the switch S4 receives the second arriving packet, and repeats the steps S37 to S39. At the step S38, because Seq_old=1, the sequence number Seq_new carried in the packet is 1, and Seq_new is not greater than Seq_old. Therefore, it is determined that the packet is invalid and then discarded.

It should be noted that the second packet in this embodiment is from the path S1/S6/S5.

At a step S41, for the packet sent to the switch S5 in the step S38, the steps S37 to S39 are repeated, and a CPU of the switch S5 finds that the packet is an invalid packet, so the packet is discarded. Thus, the potential threat of broadcast storms caused by BUM packets on the loop is completely eliminated.

In an embodiment, normal service packets can enjoy the benefits brought by multiple paths provided by the ring network, and the potential threat of BUM broadcast storms is eliminated.

### Example Three:

FIG. 19 is a schematic diagram of sequence number performed by different ports according to an example.

A network includes a host 1, a host 2, switches 1/2/3/4, a PRP device, and an HSR device.

Firstly, the host 1 sends a free Address Resolution Protocol (ARP) packet. The switch 1 receives the packet from a port SP1, and finds that the packet needs to be sent to a CPU for processing according to a matching policy of the switch 1. The CPU of the switch 1 finds that this packet is a BUM packet, which is neither a known protocol packet, nor carries a sequence number, so that sequence number needs to be performed. Secondly, the CPU finds an egress interface and determines that a matching service flow needs to be sent to ports SP2, SP3, SP4, and SP5. This matching service flow enters for the first time, and the sequence number Seq_new=Seq_old=0. Seq_new is updated to make Seq_new=Seq_old+1=1, and the sequence number of 1 is encapsulated as a parameter. Finally, PRP, HSR, and RTag encapsulation are respectively performed according to encapsulation types of the ports. A packet encapsulated in the PRP format is sent to the port SP2, a packet encapsulated in the HSR format is sent to the port SP3, and a packet encapsulated in the RTag format is sent to the ports SP4 and SP5.

It should be noted that subsequent packet processing is as the steps S20 to S31 in the embodiment shown in FIG. 18, and has the identical technical principles and the identical technical effects. For the technical principles and technical effects of this embodiment, reference may be made to the related description in the embodiment shown in FIG. 18. To avoid redundancy, the details will not be repeated here.

### Example Four:

This example shows that when a port can encapsulate a sequence number by itself, the CPU only needs to send a sequence number and an original packet to the corresponding interface, and the corresponding port performs sequence number by itself. A network corresponding to this case is also as shown in FIG. 19.

The network includes a host 1, a host 2, switches 1/2/3/4, a PRP device, and an HSR device.

Firstly, the host 1 sends a free ARP packet. The switch 1 receives the packet from a port SP1, and finds that the packet needs to be sent to a CPU for processing according to a matching policy. The CPU of the switch 1 finds that this packet is a BUM packet, which is neither a known protocol packet, nor carries a sequence number, so that sequence number needs to be performed. Secondly, the CPU of the switch 1 finds an egress interface and determines that a matching service flow needs to be sent to ports SP2, SP3, SP4, and SP5. This matching service flow enters for the first time, and the sequence number Seq_new=Seq_old=0. Seq_new is updated to make Seq_new=Seq_old+1=1, and the sequence number of 1 is encapsulated as a parameter. Finally, PRP, HSR, and RTag encapsulation are respectively performed according to encapsulation types of the ports. A packet encapsulated in the PRP format is sent to the port SP2, and a packet encapsulated in the HSR format is sent to the port SP3. At the same time, it is found that the ports SP4 and SP5 can process RTag format encapsulation by themselves, so the CPU sends the original packet, the sequence number, and port numbers to a switch chip for processing. The switch chip encapsulates a packet in the RTag format according to the parameters at each of the egress interfaces SP4 and SP5, and sends out the packet.

It should be noted that subsequent packet processing is as the steps S30 to S41 in the embodiment shown in FIG. 18, and has the identical technical principles and the identical technical effects. For the technical principles and technical effects of this embodiment, reference may be made to the related description in the embodiment shown in FIG. 18. To avoid redundancy, the details will not be repeated here.

In addition, an embodiment of the present disclosure provides a packet processing apparatus, including: a memory, a processor, and a computer program stored in the memory and executable by the processor.

The processor and the memory may be connected by a bus or in other ways.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

The non-transitory software program and instructions required to implement the packet processing method of the foregoing embodiments are stored in the memory which, when executed by the processor, causes the processor to implement the packet processing method of the foregoing embodiments, for example, implement the method steps S100 to S200 in FIG. 3, the method steps S210 to S220 in FIG. 5, the method step S400 in FIG. 6, the method step S221 in FIG. 7, the method steps S500 to S700 in FIG. 8, the method steps S610 to S630 in FIG. 9, the method step S631 in FIG. 10, or the method step S6310 in FIG. 11.

The apparatus embodiments or system embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing a computer-executable instruction which, when executed by a processor or controller, for example, by a processor in the device embodiment described above, may cause the processor to implement the packet processing method of the foregoing embodiments, for example, implement the method steps S100 to S200 in FIG. 3, the method steps S210 to S220 in FIG. 5, the method step S400 in FIG. 6, the method step S221 in FIG. 7, the method steps S500 to S700 in FIG. 8, the method steps S610 to S630 in FIG. 9, the method step S631 in FIG. 10, the method step S6310 in FIG. 11, the method steps S810 to S820 in FIG. 12, the method steps S821 to S822 in FIG. 13, the method step S900 in FIG. 14, or the method steps S8220 in FIG. 15.

In addition, referring to FIG. 20, an embodiment of the present disclosure provides a network device. The network device 200 includes a memory 210, a processor 220, and a computer program stored in the memory 210 and executable by the processor 220.

The processor 220 and the memory 210 may be connected by a bus or in other ways.

The memory 210, as a non-transitory computer-readable storage medium, may be configured for storing a non-transitory software program and a non-transitory computer-executable program. In addition, the memory 210 may include a high-speed random access memory, and may also include a non-transitory memory, e.g., at least one magnetic disk storage device, flash memory device, or other non-transitory solid-state storage device. In some implementations, the memory 210 may include memories located remotely from the processor 220, and the remote memories may be connected to the processor 220 via a network. Examples of the network include, but not limited to, the Internet, an intranet, a local area network, a mobile communication network, and combinations thereof.

The embodiments of the present disclosure include a packet processing method, including: receiving a first data packet; and sending the first data packet to a processing unit when it is determined that the first data packet is a BUM packet, such that the processing unit, when it is determined that the first data packet carries a sequence number, acquires a sequence number of the first data packet from the first data packet and processes the first data packet according to the sequence number of the first data packet and a preset packet sequence number. According to the schemes provided in the embodiments of the present disclosure, a first data packet is firstly received, and when it is determined that the first data packet is a BUM packet, the first data packet is sent to a processing unit. Therefore, the processing unit can distinguish a normally forwarded service packet from a particular BUM packet, thereby reducing the cache requirement on a chip. When determining that the first data packet is a data packet carrying a sequence number, the processing unit processes the first data packet according to a sequence number of the first data packet and a preset packet sequence number, and determines according to a result of the processing of the first data packet whether to forward or discard the first data packet. Therefore, the chip performance of the processing unit can be fully utilized to quickly improve the packet processing advantage and realize the distinguishing BUM packets from other types of packets, thereby conveniently and efficiently suppressing network storms.

The embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a combination of hardware and a software functional unit.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as central processing unit, digital signal processor, or microprocessor, or as hardware, or as an integrated circuit, such as application-specific integrated circuit. Such software may be distributed on a computer-readable medium, which may include a computer storage medium (or non-transitory medium) and a communication medium (or transitory medium). As well known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, Random Access Memory (RAM), Read-Only Memory (ROM), Electrically Erasable Programmable Read-Only Memory (EEPROM), flash memory or other memory technology, Compact Disc Read-Only Memory (CD-ROM), Digital Versatile Disc (DVD) or other optical storage, cassette, magnetic tape, magnetic disk storage or other magnetic storage device, or any other medium which can be used to store the desired information and which can be accessed by a computer. In addition, as well known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the protection scope of the present disclosure. Such equivalent modifications or replacements fall within the scope defined by the claims of the present disclosure.

## Claims

1. A packet processing method, comprising:
receiving a first data packet; and
sending the first data packet to a processing unit in response to determining that the first data packet is a Broadcast, Unknown unicast, Multicast, BUM, packet, such that the processing unit, in response to determining that the first data packet carries a sequence number, acquires a sequence number of the first data packet from the first data packet and processes the first data packet according to the sequence number of the first data packet and a preset packet sequence number.

2. The packet processing method of claim 1, wherein the preset packet sequence number is a sequence number of a second data packet received last time; and processing the first data packet according to the sequence number of the first data packet and a preset packet sequence number comprises:
discarding the first data packet in response to the sequence number of the first data packet being less than or equal to the sequence number of the second data packet; or
forwarding the first data packet to a first packet sending port in response to the sequence number of the first data packet being greater than the sequence number of the second data packet.

3. The packet processing method of claim 2, wherein the method further comprises:
updating the preset packet sequence number from the sequence number of the second data packet to the sequence number of the first data packet.

4. The packet processing method of claim 2, wherein before forwarding the first data packet to a first packet sending port, the method further comprises:
removing the sequence number from the first data packet in response to determining that the first packet sending port being an edge port.

5. A packet processing method, applied to a first network device, the method comprising:
receiving an initial data packet carrying a first sequence number;
sending the initial data packet to a processing unit in response to determining that the initial data packet is a Broadcast, Unknown unicast, Multicast, BUM, packet, such that the processing unit, in response to determining that the first sequence number is not encapsulated in the initial data packet, performs encapsulation processing on the initial data packet to obtain a first data packet carrying the sequence number encapsulation; and
sending the first data packet to a second network device, such that the second network device performs the packet processing method of any one of claims 1 to 4.

6. The packet processing method of claim 5, wherein performing encapsulation processing on the initial data packet comprises:
updating the first sequence number of the initial data packet to obtain a second sequence number of the initial data packet;
determining a second packet corresponding to the second sequence number according to the second sequence number;
determining a second packet sending port corresponding to the second packet according to the second packet; and
performing the encapsulation processing on the initial data packet according to a type of the second packet sending port.

7. The packet processing method of claim 6, wherein performing the encapsulation processing on the initial data packet according to a type of the second packet sending port comprises:
encapsulating the second sequence number according to a preset encapsulation format in response to determining that the second packet sending port is not an edge port, wherein the preset encapsulation format matches the second packet sending port.

8. The packet processing method of claim 6 or 7, wherein before performing encapsulation processing on the initial data packet, the method further comprises:
determining according to the second packet sending port whether the second packet sending port has a sequence number capability, which represents that the second packet sending port supports sequence number.

9. A packet processing method, applied to a network system comprising a first network device and a second network device, the method comprising:
receiving, by the second network device, a first data packet sent by the first network device;
sending, by the second network device, the first data packet to a processing unit in response to determining that the first data packet is a Broadcast, Unknown unicast, Multicast, BUM, packet, such that in response to the processing unit determining that the first data packet carries a sequence number, the second network device acquires a sequence number of the first data packet from the first data packet and processes the first data packet according to the sequence number of the first data packet and a preset packet sequence number.

10. The packet processing method of claim 9, wherein the preset packet sequence number is a sequence number of a second data packet received last time; and processing, by the second network device, the first data packet according to the sequence number of the first data packet and a preset packet sequence number comprises:
discarding, by the second network device, the first data packet in response to the sequence number of the first data packet being less than or equal to the sequence number of the second data packet; or
forwarding, by the second network device, the first data packet to a first packet sending port in response to the sequence number of the first data packet being greater than the sequence number of the second data packet, wherein the first packet sending port corresponds to the first data packet.

11. The packet processing method of claim 10, further comprising:
updating, by the second network device, the preset packet sequence number from the sequence number of the second data packet to the sequence number of the first data packet.

12. The packet processing method of claim 10, wherein before forwarding, by the second network device, the first data packet to a first packet sending port, the method further comprises:
removing, by the second network device, the sequence number from the first data packet in response to determining that the first packet sending port is an edge port.

13. A packet processing apparatus, comprising: a memory, a processor, and a computer program stored in the memory and executable by the processor, wherein the computer program, when executed by the processor, causes the processor to perform the packet processing method of any one of claims 1 to 8.

14. A computer-readable storage medium, storing a computer-executable instruction which, when executed by a computer, causes the computer to perform the packet processing method of any one of claims 1 to 12.
